(19) Europäisches Patentamt

European Patent Office

Office européen des brevets

(11) Veröffentlichungsnummer : **0 366 687 B1**

(12) **EUROPÄISCHE PATENTSCHRIFT**

(45) Veröffentlichungstag der Patentschrift :
09.10.91 Patentblatt 91/41

(21) Anmeldenummer : 88905687.5

(22) Anmeldetag : 07.07.88

(86) Internationale Anmeldenummer :
PCT/DE88/00419

(87) Internationale Veröffentlichungsnummer :
WO 89/00687 26.01.89 Gazette 89/03

(51) Int. Cl.⁵ : **G01N 27/12**

(54) **HERSTELLUNG VON INERTEN, KATALYTISCH WIRKSAMEN ODER GASSENSITIVEN KERAMIKSCHICHTEN FÜR GASSENSOREN.**

(30) Priorität : 11.07.87 DE 3723052

(43) Veröffentlichungstag der Anmeldung :
09.05.90 Patentblatt 90/19

(45) Bekanntmachung des Hinweises auf die
Patenterteilung :
09.10.91 Patentblatt 91/41

(84) Benannte Vertragsstaaten :
AT BE CH DE FR GB IT LI NL SE

(56) Entgegenhaltungen :
BE-A- 881 051
US-A- 3 900 815
US-A- 3 929 609
Patent Abstracts of Japan, vol. 7, no. 18,
(P-170) (1163) 25 January 1983 & JP A
57173743

(73) Patentinhaber : ROTH-Technik GmbH & Co.
Forschung für Automobil- und Umwelttechnik
Max-Roth-Strasse
W-7560 Gaggenau (DE)

(72) Erfinder : HÄFELE, Edelbert
Talwiesenstr. 13
W-7500 Karlsruhe 1 (DE)
Erfinder : HÄRDTL, Karl-Heinz
Prof.-Eichmannstr. 27
W-6729 Hagenbach (DE)
Erfinder : MÜLLER, Andreas
Rottmannstr. 30
W-6900 Heidelberg (DE)
Erfinder : SCHÖNAUER, Ulrich
Jollystr. 1
W-7500 Karlsruhe (DE)

(74) Vertreter : Säger, Manfred, Dipl.-Ing.
Säger & Partner Postfach 810 809
W-8000 München 80 (DE)

## Beschreibung

Die Erfindung betrifft ein Verfahren gemäß dem Oberbegriff des Hauptanspruches.

Die Konzentration von Gasen, insbesondere die Konzentration von Sauerstoff und reduzierenden Gasen, wird in zunehmendem Maße durch geeignete Sensoren gemessen. Als Halbleiter für solche Sensoren wurden u. a. Perovskite, insbesondere Titanat-Mischoxide, verwendet. Diese Halbleiter zeigen in Abhängigkeit vom Partialdruck der Meßgase und der Sensortemperatur eine starke Änderung des elektrischen Widerstands. Bei Kenntnis der Temperatur oder durch deren Konpensation kann die Messung des Halbleiter-Widerstands zur Bestimmung des Partialdrucks dieser Meßgase herangezogen werden.

Solche Sensoren können miniaturisiert werden und sind wegen der chemischen Stabilität und mechanischen Härte der meßaktiven Halbleiter-Keramik äußerst widerstandsfähig gegen äußere Einflüsse und deshalb für Meßaufgaben in schwer zugänglichen, rauhen Umgebungen nahezu ideal geeignet.

Ein besonderer Bedarf für Gassensoren zeichnet sich in der Kraftfahrzeugindustrie ab, weil aus Gründen des Umweltschutzes die Kraftstoff/Luftgemischbildung in jedem Fahrzustand möglichst exakt eingestellt werden muß. Allerdings sind hier die Anforderungen an die Sensoren besonders hoch ; insbesondere zur Verwendung in schnellaufenden Verbrennungsmotoren mit Drehzahlen bis 6000 U/min muß die Ansprechzeit der Sensoren extrem klein sein.

Halbleiter für Gassensoren werden zur Zeit durch drei unterschiedliche Methoden hergestellt :

1. durch Dünnfilmtechnik
2. durch Sinterung keramischer Pellets
3. durch manuelles Auftragen der Paste mit Hilfe eines Pinsels.

Die Herstellung von Halbleitern für Gassensoren in Dünnfilmtechnik durch reaktives Hochfrequenzaufstäuben (Sputtern) ist beispielsweise in EP-PS 131731 beschrieben.

Dieses Verfahren ermöglicht es, äußerst dünne Gassensoren mit sehr kleiner Oberfläche herzustellen.

Nach dieser Methode hergestellte Sensoren zeigen ein sehr "schnelles" Ansprechverhalten, d. h., die Widerstandsänderung erfolgt gegenüber einer Konzentrationsveränderung des Meßgases mit zeitlich sehr geringer Verzögerung.

Allerdings ist dieses Herstellungsverfahren sehr aufwendig und damit teuer, weil es im Hochvakuum durchgeführt werden muß und weil die aufgestäubten Mischoxidschichten nachbehandelt werden müssen.

Bedingt durch die kurzen freien Weglängen der aufzubringenden Teilchen beim Aufstäuben und die hieraus resultierenden Stoßprozesse können auch bei Verwendung von Schablonen keine exakten geometrischen Strukturen hergestellt werden.

Weiterhin ist eine Dotierung der Halbleiter zur Optimierung ihrer Eigenschaften nur sehr bedingt möglich, da die Zahl der durch Aufstäuben gleichzeitig auftragbaren Elemente begrenzt ist. Aus diesen Gründen kann sich die Dünnfilmtechnik nur in speziellen Bereichen durchsetzen.

Viele Sensoren werden deshalb als Keramik durch Sinterung hergestellt. Solche gesinterten Sensoren sind z. B. in den Patentschriften US-4,044,601; US-3,953,173 und US-4,454,494 beschrieben.

Die Dicke der gesinterten Keramikschicht beträgt mindestens 20 µm, meist jedoch 500 µm. Die Ansprechgeschwindigkeit solcher Sensoren ist im Vergleich zu den durch Dünnfilmtechnik (Aufstäuben) hergestellten deutlich schlechter, denn die Ansprechzeit auf Konzentrationsveränderungen im Meßgas ist proportional zum Quadrat der Schichtdicke und erhöht sich deshalb mit zunehmender Schichtdicke beträchtlich.

Aus der DE-OS 3024449 ist bekannt, daß Halbleiter für Gassensoren durch manuelles Auftragen einer das Halbleitermaterial enthaltenden Paste hergestellt werden können. Die Schichtdicken betragen dabei mehr als 20 µm. Das Verfahren ist schlecht reproduzierbar, erfordert eine Nachbearbeitung und ist für eine Serienfertigung von Gassensoren nicht geeignet.

Aus der Veröffentlichung Patent Abstracts of Japan, Band 7, Nr. 18 (P-170) (1163), 25.01.1983 & JP-A-57-173743 ist ein Sensor bekannt, der aus einem Sensorelement besteht, auf dem ein Widerstandsdraht angebracht ist.

Das Sensorelement und der Widerstandsdraht sind mit einer keramischen Deckschicht überzogen, die im Bereich des Widerstandsdrahts als katalytische Schicht wirkt.

Der Widerstandsdraht wird durch Siebdruck auf dem Sensorelement angebracht, wobei ein Gemisch aus pulverförmigem Platin oder einem anderen Metallpulver und einem hitzebeständigen anorganischen Pulver verwendet wird.

Die Anwendung der Siebdrucktechnik bezieht sich nur auf den metallischen Widerstandsdraht und nicht auf das Sensorelement selbst oder die katalytisch wirksame Schicht.

Ferner ist aus der US-A-3,900,815 ein Gassensorelement und ein Verfahren zu dessen Herstellung bekannt, das aus einem porösen Zinnoxid-Halbleiterelement besteht.

Die Porosität wird erzielt, indem das Vorläufermaterial des Zinnoxid-Halbleiters oder Zinnoxid selbst mit einer verdampfbaren Substanz vermischt und die Mischung anschließend erhitzt wird, wobei die Poren zurückbleiben.

Aus meßtechnischen Gründen kann es vorteilhaft sein, die gassensitive Halbleiterschicht mit einer chemisch inerten, nicht gassensitiven Zwischenschicht und einer darüber angeordneten katalytisch wirksamen Schicht zu überziehen.

Aufgabe der vorliegenden Erfindung ist es deshalb, ein reproduzierbares, einfaches, kostengünstiges und für die Serienproduktion geeignetes Verfahren zur Herstellung von inerten, katalytisch wirksamen oder gassensitiven Keramikschichten für Gassensoren zu schaffen, durch das sich Keramik-Halbleiter mit Schichtdicke von weniger als 100 µm, vorzugsweise weniger als 20 µm, und entsprechend hoher Ansprechgeschwindigkeit hergestellt werden können, die erforderlichenfalls mit einer inerten bzw. katalytisch wirksamen Schicht überzogen sind.

Dieses Verfahren soll die Herstellung miniaturisierter Gassensoren ermöglichen. Die Halbleiter sollen in speziellen, vorgegebenen geometrischen Formen mit scharf abgegrenzten Randzonen herstellbar sein.

Diese Aufgabe wird bei einem gattungsgemäßen Verfahren gemäß dem Oberbegriff des Hauptanspruchs erfindungsgemäß durch dessen kennzeichnende Merkmale gelöst.

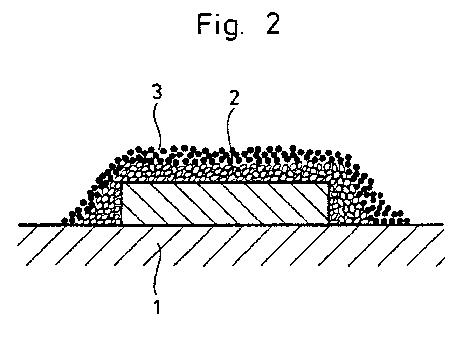

Das Substrat 1 kann dabei aus einem chemisch inerten, hochtemperaturbeständigen elektrischen Isolator bestehen. Das Herstellungsverfahren kann jedoch auch wiederholt werden, wobei dann das Substrat aus einem bereits beschichteten Substrat besteht, auf das zunächst eine inerte 2 und danach eine katalytisch wirksame Schicht 3 oder eine weitere gassensitive Halbleiterschicht aufgebracht wird (Fig. 2).

Die Siebdrucktechnik ist als Farbdruckmethode zum Bedrucken von Papier und Stoff allgemein bekannt.

Durch Siebdrucktechnik hergestellte Gassensoren können kostengünstig produziert werden, weil der zeit- und energieaufwendige Sinterschritt bzw. das Aufstäuben im Hochvakuum bei der Dünnfilmtechnik und die in beiden Fällen notwendige Nachbearbeitung entfallen.

Das Halbleitermaterial kann in Schichtdicken bis herunter in die Größenordnung von 1 µm hergestellt werden. Dadurch ergeben sich Gassensoren mit hoher Ansprechgeschwindigkeit (Fig. 2). Ferner kann die geometrische Form des Halbleiters in einfacher Weise dem Einsatzort und den Einsatzbedingungen angepaßt werden, wobei sich der Sensor — im Gegensatz zur Sintertechnik — miniaturisieren läßt. Ein besonderer Vorteil besteht darin, daß auf die gassensitive Schicht weitere gassensitive oder inerte oder katalytisch wirksame Schichten mit demselben Verfahren aufgebracht werden können.

Für eine Sensorfertigung mit großen Stückzahlen ist die Siebdrucktechnik deshalb besonders geeignet.

Als Substrat kommen alle Stoffe in Frage, die bei den Einsatzbedingungen des Gassensors (300°-1200°C) chemisch ausreichend stabil sind und mit der meßaktiven Schicht keine Wechselwirkungen eingehen.

Die Erfindung wird anhand des folgenden Ausführungsbeispiels näher erläutert:

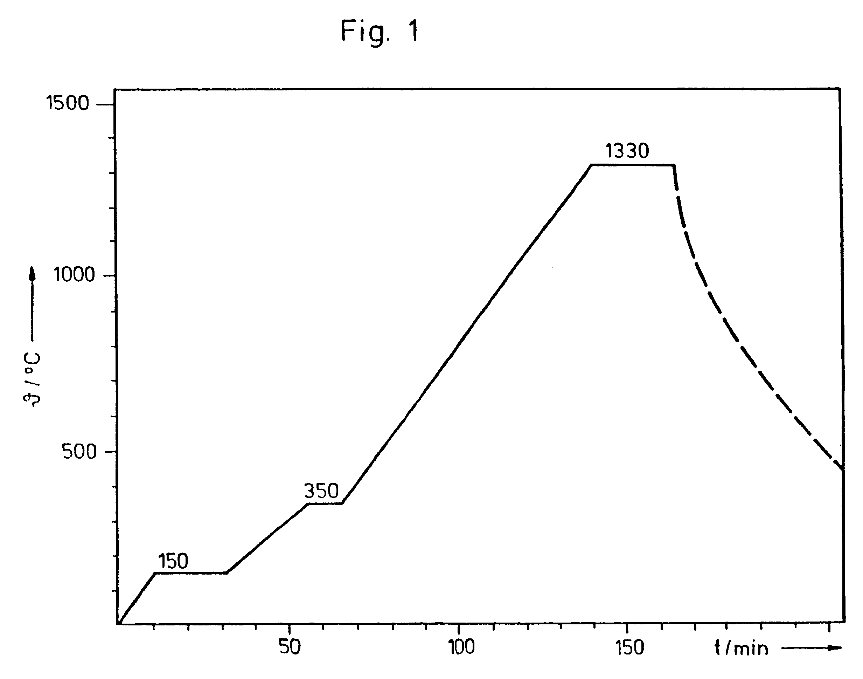

Herstellung der Paste aus 70% SrTiO$_3$ (HST-2/HPST-2 der Fa. Fuji) und 30% organischem Pastengrundstoff, bestehend aus Ethylcellulose, Butylcarbitolacetat und α-Terpineol. Auftragen der Schicht mittels Siebdrucktechnik, danach Durchfahren eines Temperaturprofils bis 1330°C entsprechend der Figur 1.

**Patentansprüche**

1. Verfahren zur Herstellung von inerten, katalytisch wirksamen oder gassensitiven Keramikschichten für Gassensoren, insbesondere für potentiometrische oder resistive Gassensoren, vorzugsweise mit Volumeneffekt, aus einer Paste, bestehend aus einem pulverförmigen Keramik-Grundmaterial und einem Pastengrundstoff, wobei mit der Paste ein Substrat mit Hilfe der Siebdrucktechnik beschichtet wird, **dadurch gekennzeichnet, daß**

a) das Keramik-Grundmaterial halbleitend ist und ein organischer Pastengrundstoff verwendet wird,

b) eine Schichtdicke von 1-100 µm, vorzugsweise 1-20 µm, eingehalten wird, und

c) das beschichtete Subtrat einer thermischen Behandlung unterzogen wird, derart, daß in einer ersten Aufheizphase die flüssigen Bestandteile des organischen Pastengrundstoffs verdampft werden, in einer zweiten Aufheizphase bei höherer Temperatur die festen Bestandteile des organischen Pastengrundstoffs rückstandsfrei verbrannt werden und daß danach eine dritte Aufheizphase erfolgt, deren Zeitdauer und Maximaltemperatur derart gewählt sind, daß ein Ablösen des halbleitenden Keramik-Grundmaterials vom Substrat verhindert wird.

2. Verfahren nach Anspruch 1, dadurch gekennzeichnet, daß das Substrat aus einem chemisch inerten, hochtemperaturbeständigen elektrischen Isolator besteht.

3. Verfahren nach Anspruch 1, dadurch gekennzeichnet, daß das Substrat mindestens einmal mit Hilfe der Siebdrucktechnik mit einer inerten oder gassensitiven Keramikschicht vorbeschichtet ist.

**Claims**

1. A method of making inert, catalytically active or gas-sensitive ceramic layers for gas sensors, more particularly for potentiometric or resistive gas sensors, preferably with volume effect, from a paste consisting of a pulverulent ceramic base material and a paste base material, in which a substrate is coated with the paste by means of the screen printing technique, characterised in that

   a) the ceramic base material is semiconductive and an organic paste base material is used,

   b) a layer thickness of 1 to 100 µm, preferably 1 to 20 µm, is maintained, and

   c) the coated substrate is subjected to thermal treatment in such a manner that in a first heating phase the liquid components of the organic paste base material are evaporated, in a second heating phase at higher temperature the solid components of the organic paste base material are burnt away leaving no residue and that afterwards a third heating follows, of which the duration and maximum temperature are selected such that separation of the semiconductive ceramic base material from the substrate is prevented.

2. A method according to Claim 1, characterised in that the substrate consists of a chemically inert electrical insulator resistant to high temperature.

3. A method according to Claim 1, characterised in that the substrate is previously coated at least once with an inert or gas-sensitive ceramic layer by means of the screen printing technique.

**Revendications**

1. Procédé de fabrication de couches de céramiques inertes, catalytiquement actives ou sensibles aux gaz pour capteurs de gaz, en particulier pour des capteurs potentiométriques ou résistifs, de préférence avec un effet de volume, à partir d'une pâte constituée d'un matériau à base de céramique pulvérulente et d'une substance de base pâteuse en enduisant un substrat de la pâte par la technique de sérigraphie, caractérisé en ce que

   (a) le matériau de base céramique est semi-conducteur et la substance de base pâteuse est organique,

   (b) on observe une épaisseur de couches de 1 à 100 µm, de préférence de 1 à 20 µm ; et

   (c) le substrat enduit est soumis à un traitement thermique de telle sorte que, dans une première phase de chauffage, les constituants volatils de la substance de base organique pâteuse soient vaporisés, dans une deuxième phase de chauffage à une température plus élevée, les constituants solides de la substance de base organique pâteuse sont brûlés sans résidus et en ce qu'une troisième phase de chauffage a lieu ensuite, dont la durée et la température maximales sont choisies de telle sorte que l'on empêche un détachement de la substance de base de céramique semi-conductrice du substrat.

2. Procédé selon la revendication 1, caractérisé en ce que le substrat est composé d'un isolant électrique chimiquement inerte, résistant à haute température.

3. Procédé selon la revendication 1, caractérisé en ce que le substrat est préalablement enduit au moins une fois, par la technique de sérigraphie, d'une couche de céramique inerte ou sensible aux gaz.

Fig. 1

EP 0 366 687 B1

Fig. 2